# EUROPEAN PATENT APPLICATION

(11) **EP 4 148 242 A1**
(43) Date of publication of application: **15.03.2023**
(21) Application number: 22194883.9
(22) Date of filing: 09.09.2022
(51) Int. Cl.: F02C 3/34, C10L 3/08, C25B 1/04, C25B 15/08, F02C 6/14

(54) **A SYSTEM ENABLING THE STORAGE OF ELECTRICITY AND REGULATION OF THE ELECTRICITY SYSTEM AND A PROCEDURE FOR OPERATING THE SYSTEM**

(30) Priority: 13.09.2021 HU 2100321
(71) Applicant: Hujber, Otto, 1162 Budapest (HU)
(72) Inventor: Hujber, Otto, 1162 Budapest (HU)
(74) Representative: Jámbor, Eszter

(57) **Abstract**

The subject of the invention is a system enabling the storage of electricity - preferably renewable electricity - and the regulation of the electricity system, which includes at least one methanization reactor producing biomethane from carbon dioxide and hydrogen, at least one water electrolyzer producing hydrogen and oxygen, pumps, heat exchangers, valves, compressors, pipelines connecting the individual elements and the control system. The feature of the solution is that the system also includes at least one gas engine (1) that can be operated using air burning in traditional way or in carbon dioxide generating mode. The exhaust pipe (2) of the gas engine (1) is connected via a valve (52) and at least one heat exchanger (8, 9, 48) to a separator (10) for dewatering the flue gases leaving the exhaust pipe (2). The separator (10) is connected on the one hand to a first water purifier (55) and on the other hand through additional heat exchangers (12, 13, 15, 19, 20, 23, 49), compressors (14, 16) and valve (24) to a buffer tank (25) provided to store carbon dioxide. The buffer tank (25) is connected to the methanization reactor (33) via a carbon dioxide supply valve (29) on the one hand, and on the other hand, via a carbon dioxide valve (28) and a mixing valve (45) as well as an additional valve (46) and a static mixing element (47) to the inlet of the gas engine (1). The methanization reactor (33) is connected to the hydrogen output of the water electrolyzer (40) via a hydrogen supply valve (35), a hydrogen buffer tank (36) and a compressor (37). The reaction water drain of the methanization reactor (33) is connected to a second water purifier (58), which is connected to the water inlet of the water electrolyzer (40). The water inlet of the water electrolyzer (40) is also connected to the water output of the first water purifier (55). The oxygen output of the water electrolyzer (40) is connected via a compressor (42) to an oxygen buffer tank (43), which is connected to the mixing valve (45) via an oxygen valve (44). The methanization reactor (33) can be connected to the natural gas network via valve (32) and compressor (30). The control system (51) is in a controlling connection with the water electrolyzer (40), the valves (5, 17, 24, 28, 29, 32, 35, 44, 46, 52), the buffer tanks (25, 36, 43), and the compressors (14, 16, 42, 30, 37).

On the other hand, the subject of the invention is a method for operating the system that enables the storage of electrical energy and the regulation of the electrical energy system described above.

## Description

The subject of the invention is a system enabling the storage of electricity - preferably renewable electricity - and the regulation of the electricity system, which includes at least one methanization reactor producing biomethane from carbon dioxide and hydrogen, at least one water electrolyzer producing hydrogen and oxygen, pumps, heat exchangers, valves, buffer tanks for gas storage, pipelines connecting the individual elements and the control system. The subject of the invention is also the method for operating the system.

The storage of renewable electricity (solar energy and wind energy) in the framework of the so-called Power to Gas (P2G) process, in the form of methane, is still known. The essence of the technology is the conversion of carbon dioxide and hydrogen into methane, which can be done with the traditional Sabatier process or with biomethane production in a biocatalytic reactor. For this, hydrogen is produced by electrolysis of water, carbon dioxide is obtained from biogas or other fermentation technologies that produce CO2, or it is extracted from the flue gas of power plants. Each process in itself is an expensive procedure, capital-intensive and involves significant operating costs. In addition, the transportation and storage of extracted carbon dioxide is an additional cost. Choosing the location of the P2G process can also be a problem, because a sufficiently high-power electrical connection and a natural gas network, where the produced biomethane can be fed, are also needed, as well as the possibility of water intake. The purpose of water splitting is to produce hydrogen, but during this process oxygen is also produced, namely eight times the amount of hydrogen produced. If we want to utilize the oxygen as well, this significantly further narrows down the choice of site.

The Oxy-fuel combustion is a well-known concept and solution, and it has already been used, mostly on an experimental basis, in the case of high-power (more than 100 MW) boilers and turbines, with the aim of reducing carbon dioxide emissions. The known solutions are not suitable for the storage of renewable energy or the regulation of the electricity system, therefore the inventions for high-power oxygen-fired gas turbines and oxygen-fired coal boilers are not relevant in relation to oxygen-fired gas engines.

A system for the production of gas from electrical energy that can be fed into a natural gas network is described in Chinese document No. CN212102723U. The system is a P2G type system, it is not integrated with existing gas engine power plants, it does not provide a solution for the use of oxygen produced during the production of hydrogen.

Document number CN112329259A applies to a microgrid system that can communicate with the regional energy service and uses renewable energy as supplementary energy. The solution that can be found in the document is suitable for harmonizing the energy consumption of households, it does not contain information about the large-scale storage of electricity.

None of the above solutions provide guidance for the coordinated operation of gas engine power plants and methane production.

The goal of our invention is to maximize the amount of methane produced by optimizing the methane production process. Another goal of our invention is to reduce the carbon dioxide emissions of the process.

We realized that if we use operating gas engine power plants that are already part of the electricity system as sites for renewable electricity storage, and if the oxygen produced during hydrogen production, which is eight times the amount of hydrogen produced, is returned to the oxy-fuel process, we get pure carbon dioxide as a combustion product, and this carbon dioxide we can use to produce methane, the set goal is achievable.

One of the important elements of the solution we have developed is that we use operating gas engine power plants that are already part of the electricity system as the site of renewable electricity storage, on the one hand, the gas engine that produces the carbon dioxide required for the storage process, as an element that forms part of the storage technology, on the other hand, the electrical and natural gas network-connection location as a storage infrastructure.

Another essential element of the solution is that the oxygen produced by the water electrolyzer we use for the burning of the natural gas, biogas, etc., which is the fuel of the gas engine, thereby replacing traditional air (of which 78% is nitrogen). In this way, the flue gas does not need to be cleaned with expensive equipment, as the combustion product will be pure CO2, which can be used directly, without cleaning, in the methane production process.

Another important element of the solution is the utilization of the energetic potential inherent in the pure carbon dioxide that forms the exhaust gas of the gas engine. The majority of current gas engine power plants utilize the energy of the exhaust gas only up to 130 °C. With supercritical carbon dioxide technology, it is possible to increase the amount of electricity produced by small power plants by about 10-15% (to achieve an electrical efficiency of around 44-46% instead of 40%).

An important component of the solution is the electrical control, as well as the appropriately sized carbon dioxide-, oxygen- and hydrogen buffer tanks, which enable the combined heat and Power (CHP) generating companies to store the maximum amount of renewable electricity in the form of methane, within the time frame that can be made available by the system administrator (about 1,200 - 2,900 hours/year).

Gas engines, which are an element of our technical solution, are present in large numbers in the electricity system with a relatively small power (mostly below 1 MW or a few MW) and can be connected to the gas network in a distributed manner as biomethane producers. Water electrolyzers, which can be controlled by the transmission system operators, have variable power and can be switched on and off as needed, can also be connected to the electricity network system in the same distributed way.

Our invention is therefore a system enabling the storage of electricity and the regulation of an electricity system which includes at least one methanization reactor producing biomethane from carbon dioxide and hydrogen, at least one water electrolyzer producing hydrogen and oxygen, pumps, heat exchangers, valves, compressors, pipelines connecting the individual elements and a control system. The feature of the solution is that the system also includes at least one gas engine that can be operated in traditional air-burning or carbon dioxide generating mode. The exhaust pipe of the gas engine is connected via a valve and at least one heat exchanger to a separator for dewatering the flue gases leaving the exhaust pipe. The separator is connected to a first water purifier on the one hand, and on the other hand via additional heat exchangers, compressors and a valve to a buffer tank provided to store carbon dioxide. The buffer tank is connected to the methanization reactor through a carbon dioxide supply valve on the one hand, on the other hand through a carbon dioxide valve and a mixing valve, and through an additional valve and static mixing element to the inlet of the gas engine. The methanization reactor is connected to the hydrogen output of the water electrolyzer through a hydrogen supply valve, a hydrogen buffer tank and compressor. The reaction water output of the methanization reactor is connected to a second water purifier, which is connected to the water inlet of the water electrolyzer. The water inlet of the water electrolyzer is also connected to the water output of the first water purifier. The oxygen output of the water electrolyzer is connected via a compressor to an oxygen buffer tank, which is connected to the mixing valve via an oxygen valve. The methanization reactor can be connected to the natural gas network via a valve and compressor. The control system is in a controlling connection with the water electrolyzer, the valves, the buffer tanks and the compressors.

Preferred embodiments of the equipment are defined in the dependent claims 2-4.

On the other hand, the subject of the invention is a method for operating the system that enables the storage of electrical energy and the regulation of the electrical energy system described above. The characteristic of the procedure is that the gas engine is operated in the traditional air-burning or carbon dioxide generating mode. In the carbon dioxide generating mode, the flue gases exiting through the exhaust pipe of the gas engine are cooled to a temperature below 100°C by flowing through heat exchangers and a valve, and introduced into a separator, where they are dewatered. The separated water is led through a first water purifier to the water inlet of a water electrolyzer. The dehydrated flue gas is cooled to a temperature of around 30°C by passing it through heat exchangers and is led through a valve into a buffer tank for storing carbon dioxide. From the buffer tank, on the one hand, a carbon dioxide supply valve is used to supply a methanization reactor with carbon dioxide, and on the other hand, it is led through a carbon dioxide valve to a mixing valve, where it is mixed with oxygen and returned to the gas engine through a valve and a static mixing element. The hydrogen supply to the methanization reactor is provided through a buffer tank and a hydrogen supply valve. The buffer tank is fed from the operating water electrolyzer, via a compressor. The condensate produced in the methanization reactor is cleaned in a second water purifier and led to the water electrolyzer. The oxygen separated in the water electrolyzer is led to a buffer tank via a compressor, from where it is delivered to the mixing valve via an oxygen valve. The methane produced in the methanization reactor is delivered to the natural gas line through a valve and a compressor. If the methanization reactor does not work due to lack of hydrogen and the buffer tank storing carbon dioxide is full, the gas engine is set to traditional air firing mode using the control system. For this, the control system closes the appropriate valves and ensures the gas engine's air supply by opening an air supply valve and enables the discharge of the generated flue gases by opening a flue gas discharge valve. We also control the operation of the water electrolyzer with the help of the control system.

Advantageous implementation methods of the procedure are defined in the dependent claims 6-10.

I will explain my invention in more detail below based on the drawings, where:
Figure 1 is a simple version of the system according to the invention, without heat utilization,
Figure 2 shows an additional version of the system according to the invention without an external heat source,
Figure 3 shows a version of the system according to the invention, where the gas engine is part of a system where there is an external heat source, also to be utilized,
Figure 4 shows the structure of the automatic control that ensures coordinated operation of the system according to the invention.

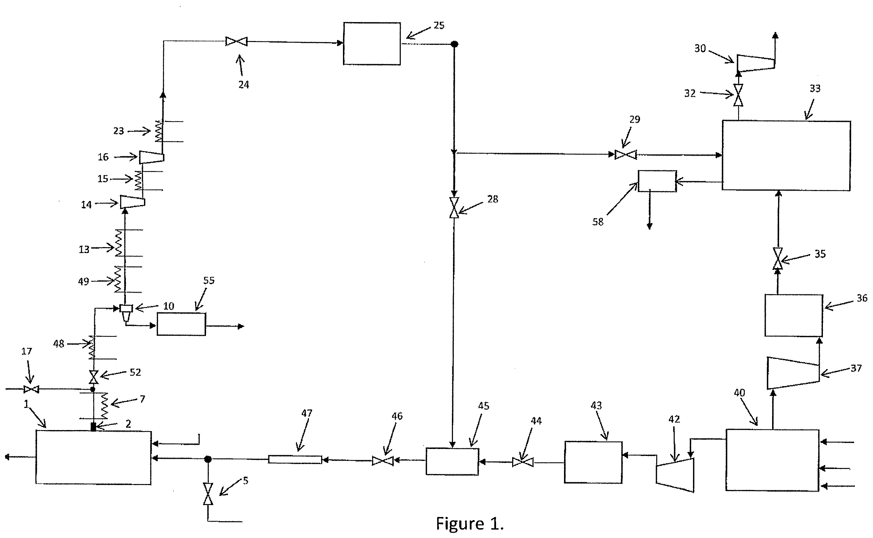

As shown in Figures 1, 2 and 3, the main elements of the invention are a gas engine 1, a water electrolyzer 40 and a methanization reactor 33. The gas engine 1 is supplied with natural gas via a natural gas connection 4. The gas engine 1 can be operated in conventional air-fired or oxygen-diluted oxygen-fired carbon dioxide generating mode, in which latter produces pure carbon dioxide for the methanization reactor 33. The water electrolyzer 40 produces hydrogen for the methanization reactor 33 and oxygen for the gas engine 1. The methanization reactor 33 can be a conventional Sabatier reactor or a biocatalytic reactor. The methanization reactor 33 produces methane from carbon dioxide and hydrogen, which can be supplied to the natural gas network 31 for storage purposes. The exhaust pipe 2 of the gas engine 1 is optionally connected to the separator 10 for dewatering the flue gases exiting the exhaust pipe 2 via a heat exchanger 7, which is a heat exchanger for existing CHP consumers, via valves 52 and at least one additional heat exchanger 48. The heat exchanger 48 can also be a technological heat consumer. The separator 10 is connected on the one hand to a first water purifier 55, and on the other hand to a buffer tank 25 for storing carbon dioxide via additional heat exchangers 13, 15, 20, 23, 49, compressors 14, 16 and a valve 24. In the exemplary embodiments, the heat exchanger with numbers 13, 15 and 23 serves as a gas cooler, the number 49 also represents a technological heat consumer, and the number 20 allows the connection of an external heat source. The buffer tank 25 is connected to the methanization reactor 33 via a carbon dioxide supply valve 29 on the one hand, and via a carbon dioxide valve 28 and a mixing valve 45 on the other hand, as well as a further valve 46 and a static mixing element 47 ensuring a sufficiently homogeneous mixing of the oxygen-carbon dioxide mixture at the input of gas engine 1. In our example, the valve 29 is an automatically controlled valve that supplies the appropriate amount of carbon dioxide to the methanization reactor 33, and the carbon dioxide valve 28 is also an automatically controlled valve that ensures that the appropriate amount of carbon dioxide enters the mixing valve 45. The methanization reactor 33 is connected to the hydrogen output of the water electrolyzer 40 via a hydrogen valve 35, a hydrogen buffer tank 36 and a compressor 37. The reaction water output of the methanization reactor 33 is connected to a second water purifier 58, which is connected to the water inlet of the water electrolyzer 40. The water inlet of the water electrolyzer 40 is also connected to the water output of the first water purifier 55. The oxygen output of the water electrolyzer 40 is connected via a compressor 42 to an oxygen buffer tank 43, which is connected to the mixing valve 45 via an automatically controlled oxygen valve 44. The mixing valve 45, in cooperation with the automatically controlled carbon dioxide and oxygen valves 28 and 44, ensures the thermal stability and optimal performance of the gas engine 1, by creating the appropriate internal proportions of the oxygen/carbon dioxide mixture that replaces the combustion air. The methanization reactor 33 can be connected to the natural gas network via valve 32 and compressor 30.

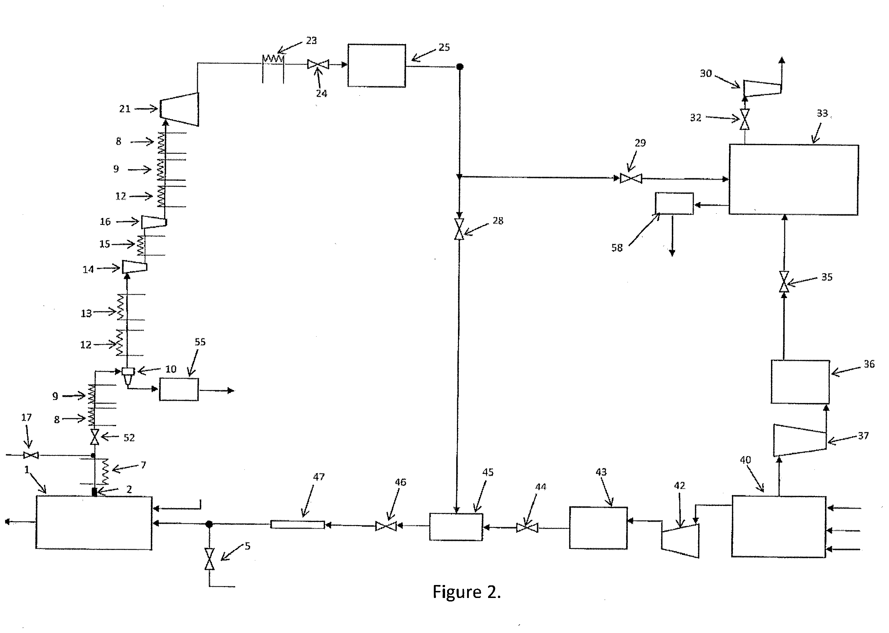

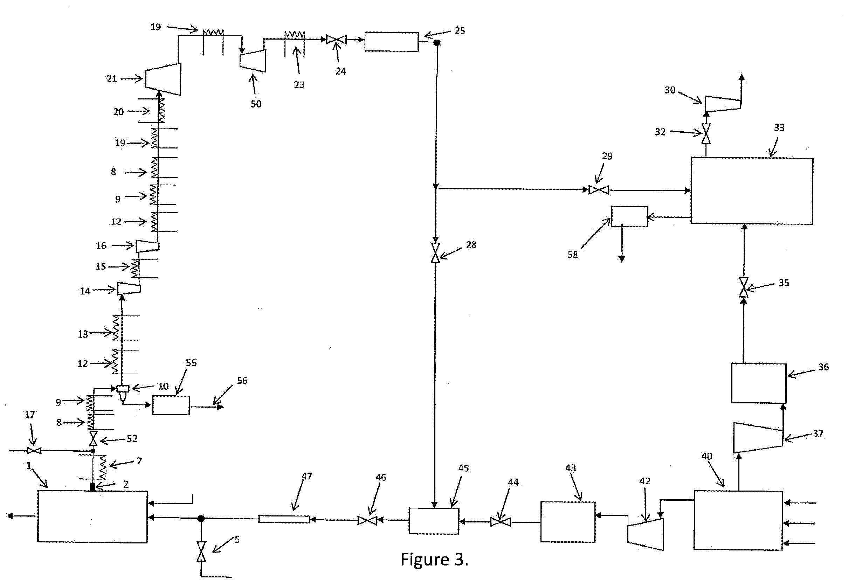

The efficiency of the system is increased by adding at least one turbine 21 utilizing the energy of supercritical carbon dioxide. Figure 2 shows such a system. In order to increase the efficiency, if an external heat source is available, it is advisable to build an additional turbine 50 utilizing carbon dioxide energy into the system. (Figure 3) The turbines 21, 50 are arranged between the separator 10 and the valve 24 arranged in front of the buffer tank 25 for storing carbon dioxide. The use of additional 8, 12, 19 heat exchangers also serves to increase efficiency.

When usable thermal energy is not available (for example, it is used for technological purposes), then the goal can only be the implementation of P2G type energy storage. This is the case even if I want to implement P2G energy storage at the lowest possible investment price. In these cases, the system does not include turbines 21 and 50, as well as heat exchangers 8, 12, 19. Such a set-up can be seen in Figure 1.

The operation of the system in the carbon dioxide generating mode of the gas engine 1 is explained with the help of figure 2. The flue gases exiting through the exhaust pipe 2 of the gas engine 1 are cooled down to a temperature below 100 °C by flowing through the heat exchangers 7, 8, 9 and the valve 52, and introduced into the separator 10, where they are dewatered. The separated water is fed through the first water purifier 55 to the water inlet of the water electrolyzer 40. The dehydrated flue gas is passed through heat exchangers 12, 13 and cooled to a temperature of around 30 °C, thereby increasing the efficiency of the compressor 14. After that, we increase the carbon dioxide's pressure up-to 40 bars and the increased temperature repeatedly is cooled to a temperature of around 30 °C in the heat exchanger 15. The pressure of the carbon dioxide in the compressor 16 is raised to a pressure of around 160 bar, then in the heat exchangers 8, 9, 12 its temperature is increased to 120°C and the carbon dioxide becomes in supercritical state. In the turbine 21, the supercritical carbon dioxide gives off its energy, from which electricity is expediently produced by the electric generator driven by the turbine, not shown in the drawing. The pressure of the carbon dioxide leaving the turbine 21 drops to a value of around 55 bar, and its temperature becomes about 60 °C, which temperature is cooled to a temperature of around 30 °C in the heat exchanger 23, before the carbon dioxide is led through a valve 24 into the buffer tank 25 for storing the carbon dioxide. From the buffer tank 25, we supply carbon dioxide to the methanization reactor 33 through the carbon dioxide supply valve 29 on the one hand, and on the other hand, it is led to the mixing valve 45 through the carbon dioxide valve 28, where it is mixed with oxygen and returned to the gas engine 1 through the valve 46 and the static mixing element 47. The hydrogen supply to the methanization reactor 33 is provided through the buffer tank 36 and the hydrogen supply valve 35. The buffer tank 36 is fed by operating the water electrolyzer 40, through the compressor 37. The condensate produced in the methanization reactor 33 is purified in a second water purifier 58 and led to the water electrolyzer 40. The oxygen separated in the water electrolyzer 40 is led to a buffer tank 43 via a compressor 42, from where it is delivered to the mixing valve 45 via an oxygen valve 44. The methane produced in the methanization reactor 33 is fed into the natural gas line through a valve 32 and a compressor 30.

Figure 3 shows the case when the gas engine 1 is a part of a system, where there is a usable heat source. For example, when the gas engine 1 utilizes syngas generated in a supercritical water wet-biomass gasification plant, where the thermal energy content of the mixture leaving the tubular reactor can be utilized by turbines 21 and 50 operating as part of an auxiliary energy system. The heat source can be completely independent from the gas engine 1, e.g. during the destruction of hazardous waste, the heat content of the mixture leaving the oxidation tube reactor can also be utilized by turbines 21 and 50. The system shown in the Figure 3, can utilize any technological waste heat with a temperature above 200 °C. The mechanical system shown in Figure 3 differs from the system shown in Figure 2 only in that the carbon dioxide-based auxiliary energy system also includes the heat exchanger 20, through which the external heat energy source is connected to the system, and also includes the heat exchanger 19 for the supporting the operation of the turbine 21 (in order to increase its performance), as well as the turbines 50, in order to realize the increased energy content due to the included external thermal energy, with better efficiency. The one-step electricity production became two-step.

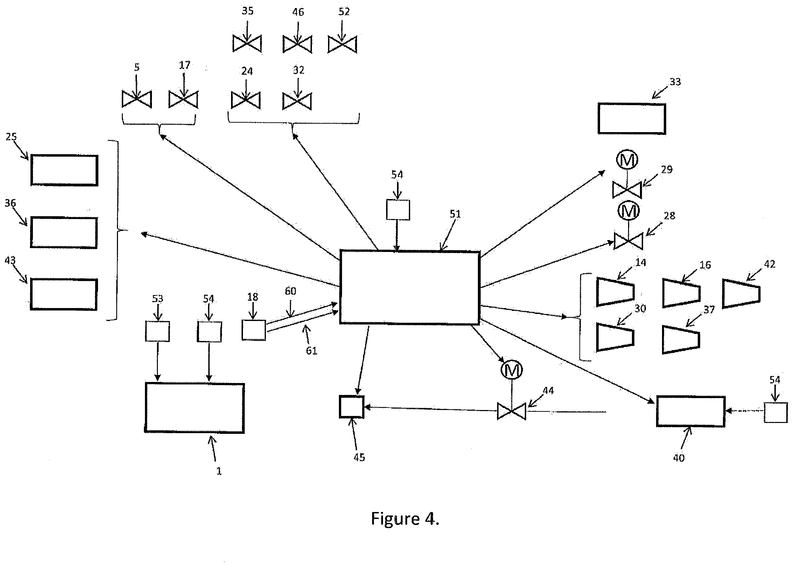

An important component of the system is an automatic control system 51 that ensures the coordinated operation of the other parts and elements. Figure 4 shows the functions of the control system 51 and the system of related devices.

If there is not enough hydrogen for the methanization reactor 33 (if the water electrolyzer 40 does not work and there is not enough hydrogen in the buffer tank 36) and the buffer tank 25 storing carbon dioxide is full, the control system 51 sets the gas engine 1 to the air firing mode. For this, it closes the corresponding valves 24, 28, 29, 32, 35, 44, 46, 52 and provides the air supply to the gas engine 1 by opening an air supply valve 5. The discharge of the generated flue gases is made possible by opening a flue gas discharge valve 17. We also control the operation of the water electrolyzer 40 with the help of the control system 51. The control system 51 can be connected to the Transmission System Operator (TSO) 54, so if the possibility of operating the water electrolyzer 40 opens up, the TSO provides this with a predetermined schedule (e.g. during the low valley and certain valley periods) or by remote access, automatic intervention directly controlled, it starts the water electrolyzer 40, and the gas engine 1 automatically switches to the carbon dioxide generating mode. For this, as soon as sufficient hydrogen is produced in the buffer tank 36, it closes valves 5 and 17 and opens valves 24, 28, 29, 32, 35, 44, 46, 52.

The open or closed state of the valves 5 and 17, i.e. the air or oxygen mode, is determined by the operating or non-operating state of the water electrolyzer 40: if the water electrolyzer 40 is operating, the valves 5 and 17 are closed and the oxygen-fuel mode generates carbon dioxide, if the water electrolyzer 40 is not operating, valve 52 is closed, valves 5 and 17 are open, i.e. gas engine 1 is operating in conventional air mode.

The operation of the electric water electrolyzer 40 is determined by the following principles:
- If possible, it should operate at maximum power as long as the hydrogen gas intake and the capacity of the hydrogen buffer tank 36 allow it. As soon as the hydrogen consumption stops for some reason and the buffer tank 36 is also full, the operation of the water electrolyzer 40 is stopped by the control system 51.
- The operation of the water electrolyzer 40 can also be limited by access to the power supply. TSO can define a schedule (e.g. in all deep valleys and certain valley periods) when it is possible to connect and operate the water electrolyzer 40. These time frames are managed by the control system 51, which switches the operation of the water electrolyzer 40 on and off according to the specified schedule.
- The automatic control system 51 also optionally allows the water electrolyzer 40 to be controlled remotely by the TSO: turning it off and on, changing its performance by switching the individual water splitting cells on and off. This external control is limited in an emergency mode by the control system 51, for example, if production is not possible due to hydrogen consumption and/or the capacity of the buffer tank, or if another emergency event or condition occurs.

The control system 51 is also in a control connection with the buffer tanks 25, 36, 43 and the compressors 14, 16,42,30,37.

The auxiliary energy system operating with supercritical carbon dioxide has independent control and regulation, which is also integrated into the control system 51.

We distinguish between two operating states of the auxiliary energy system: operating and not operating. These two operating states are automatically set by valves 5 and 17 with the state of valve 52: if valves 5 and 17 are open, gas engine 1 operates with combustion air and the branch of the carbon dioxide auxiliary energy system is closed by valve 52, the auxiliary energy system is not operating. If valves 5 and 17 are closed, valve 52 opens and the supply of carbon dioxide to the auxiliary energy system begins.

The traditional, air-fired mode of the gas engine 1 is the same in all three (Figures 1, 2 and 3) cases. By opening valves 5, 17 and closing all other valves, the gas engine 1 returns to its original mode of operation: it receives air through valve 5 and the conventionally produced flue gases flow into the chimney through valve 17. In this mode, the methanization reactor 33 operates only as long as there is sufficient carbon dioxide and hydrogen in the buffer tanks 25, 36. After that, the methanization reactor 33, within an inertia time depending on its type, ceases to operate and the production of methane is paused until the next start-up, that is, until the next switch-on of the water electrolyzer 40.

We start the system by filling the buffer tanks 25, 36, 43 and start to operate the methanization reactor 33 only after the filling is completed.

The amount of oxygen required to burn the fuel in the gas engine 1 and the amount of carbon dioxide required to ensure the thermal stability of the gas engine 1 are provided by the automatic control of the carbon dioxide valve 28 and the oxygen valve 44 and/or the mixing valve 45, for which the composition of the flue gas is continuously checked.

The hydrogen-carbon dioxide demand of the methanization reactor 33 is ensured by controlling the carbon dioxide supplying valve 29 and the oxygen supplying valve 35 with the automatic control of the methanization reactor 33. Also, the automation of the methanization reactor 33 regulates the coordinated operation of the valve 32 and the compressor 30.

The beneficial effects of the invention are described below.

The solution according to the invention can also be an electricity consumer that can be controlled by the TSO and can serve the network regulation needs of the TSO. In this case, the utilization rate of the water electrolyzer 40 can be better.

The control system 51, which is part of the invention, ensures complete independence between the operation of the gas engine 1 based small power plant (mostly CHP) which is a generating unit of the electricity system and between the operation, regulation and control, of the water electrolyzer 40, acting as a consumer of the electricity system.

The water electrolyzer 40 of the solution according to the invention, as electricity consumer, load the electric network in a spatially distributed way, individually in small units, but overall, due to the large number of gas engines 1, this solution is able to fully protect the entire electric network from the negative effects of solar and wind energy. Since the gas engine 1 units are close to solar and wind power plants, or can be there if needed, renewable electrical energy can be stored in this way at the cost of small network losses.

Gas engine 1 and the water electrolyzer 40 that are part of the system according to the invention can be independently controlled and regulated. The gas engine 1 according to the original, e.g. in accordance with its CHP or virtual power plant function (according to the set power requirements), and the water electrolyzer 40 in accordance with the electricity network schedule authorized for it.

The technical solution according to the invention, its supercritical carbon dioxide turbine auxiliary energy system, makes it possible to increase the electrical efficiency of gas engine power plants by 10-15%. The surplus electricity produced in this way can also be used for the continuous operation of one cell of the water electrolyzer 40, for the purpose of producing surplus methane and storing it.

The system according to the invention also enables the inclusion of external heat energy sources and their utilization for the production of electricity. This electricity can be used, among other things, to produce methane, continuously operating some cells of the water electrolyzer 40. The excess electricity produced by the supercritical carbon dioxide turbine auxiliary energy system (including the excess electricity generated from increasing the efficiency) enables the continuous operation of a part of the water electrolyzer 40, which accelerates its payback.

In the case of gas engine 1 operating with biogas with a high (around 40%) carbon dioxide content, thanks to the carbon dioxide turbine auxiliary energy system, the thermal efficiency of the gas engine 1 and the electrical efficiency of the small power plant improves, compared to traditional biogas operation. In this case, the carbon dioxide valve 28 mixes less carbon dioxide with the oxygen in the mixing valve 45 in accordance with the feedback from the flue gas temperature.

The widespread introduction of the invention can be further helped and accelerated by the fact that already functioning larger gas engine systems (e.g. virtual power plants) can also participate in the storage of renewable energies, by applying the technical solution that is the subject of the invention, which is made possible by the control system 51.

If the TSO allows the water electrolyzer 40 to operate continuously (in case of a significant volume of wind and solar energy inflow into the electrical network), and the performance of the water electrolyzer 40 is coordinated with the performance of the gas engine 1, then the system operates with zero carbon dioxide emissions. A plant with zero carbon dioxide emissions can be an example of decarbonization and a circular economy: methane is produced from carbon dioxide in the methanization reactor 33, and then, when it is burned, it produces carbon dioxide again, then methane again, and so on.

When natural gas, biogas (as hydrocarbon) is burned, water resulting from its hydrogen content and leaving the separator 10, after cleaning (degassing, neutralization, etc.) in the first water purifier 55, goes to the water electrolyzer 40 as its feed water. This water is supplemented by the reaction water of the methanization reactor 33, which after the second water purifier 58 will be feed water for the water electrolyzer 40, as well. About 50-50% of the feed water comes from these two sources. From the feed water, hydrogen is produced in the water electrolyzer 40, from which methane and water are produced in the methanization reactor 33, and then also water when methane is burned in the gas engine 1. Hydrogen from feed water, methane from that and water again from that. In this way, the system is closed-loop, self-sufficient in terms of water consumption - it can also be an example of a circular economy.

A very beneficial effect of the invention is that its defining system component, the small gas engine power plant (e.g. CHP), operates and is available in large numbers all over the world, therefore the wide introduction of the invention can be solved quickly and relatively cost-effectively. The system according to the invention allows the owners of small gas engine power plants, at the cost of a small additional investment, to store a large amount of solar and wind energy that has entered and is continuously entering the electricity system, as well as, in parallel with this process, to control the electricity system. Due to the smaller investment requirement, the implementation of the invention is available to many entrepreneur - this can also help the widespread introduction of the present invention.

## Claims

1. A system enabling the storage of electricity and the regulation of the electricity system, which system includes at least one methanization reactor producing biomethane from carbon dioxide and hydrogen, at least one water electrolyzer producing hydrogen and oxygen, pumps, heat exchangers, valves, compressors, pipelines connecting the individual elements and the control system, **characterized by** the fact that the system also includes at least one gas engine (1) that can be operated in air-burning or carbon dioxide generating mode, the exhaust pipe (2) of the gas engine (1) is connected via a valve (52) and at least one heat exchanger (8, 9, 48) to a separator (10) for dewatering the flue gases leaving the exhaust pipe (2), the separator (10) is connected to a first water purifier (55) on the one hand, and on the other hand, through additional heat exchangers (12, 13, 15, 19, 20, 23, 49), compressors (14, 16) and valve (24) to a buffer tank (25) provided to store carbon dioxide, the buffer tank (25) is connected to the methanization reactor (33) through a carbon dioxide supply valve (29) on the one hand, and on the other hand through a carbon dioxide valve (28) and a mixing valve (45) and through an additional valve (46) and static mixing element (47) to the inlet of the gas engine (1), the methanization reactor (33) is connected to the hydrogen output of the water electrolyzer (40) via a hydrogen supply valve (35), a hydrogen buffer tank (36) and a compressor (37), the reaction water drain of the methanization reactor (33) is connected to a second water purifier (58), which is connected to the water inlet of the water electrolyzer (40), the water inlet of the water electrolyzer (40) is also connected to the water output of the first water purifier (55), and the oxygen output of the water electrolyzer (40) is connected via a compressor (42) to an oxygen buffer tank (43), which is connected to the mixing valve (45) via an oxygen valve (44), and the methanization reactor (33) can be connected to the natural gas network via valve (32) and compressor (30) and the control system (51) is in a controlling connection with the water electrolyzer (40), the valves (5, 17, 24, 28, 29, 32 , 35, 44, 46, 52), the buffer tanks (25, 36, 43) and the compressors (14, 16, 42, 30, 37).

2. The system according to claim 1, **characterized in that** a heat exchanger (7) connected to existing CHP consumers is placed in front of the valve (52).

3. The system according to claim 1 or 2, **characterized in that** between the separator (10) and the valve (24) arranged in front of the buffer tank (25) for storing carbon dioxide at least one, preferably two, turbines (21, 50) is placed.

4. The system according to any one of claims 1-3, **characterized in that** the control system (51) is connected to the controller (54) of the Transmission System Operator (TSO).

5. Procedure for the operation of a system according to claims 1-4 enabling the storage of electricity and regulation of the electricity system, **characterized by** the fact that a gas engine (1) is operated in air-burning or carbon dioxide generating mode, in the carbon dioxide generating mode the flue gases leaving through the exhaust pipe (2) of the gas engine (1) are transferred through heat exchangers (7, 8, 9, 48) and cooled to a temperature below 100 °C by flowing through a valve (52) and introduced into a separator (10), where it is dewatered, the separated water is led through a first water purifier (55) to the water inlet of a water electrolyzer (40), the dewatered flue gas is cooled to a temperature of around 30 °C by passing it through heat exchangers (12, 13, 15, 19, 20, 23, 49) and is led through a valve (24) into a buffer tank (25) for storing carbon dioxide, from where, on the one hand, through a carbon dioxide supply valve (29) a methanization reactor (33) is supplied with carbon dioxide, on the other hand through a carbon dioxide valve (28) into a mixing valve ( 45), where it is mixed with oxygen and returned to the gas engine (1) through a valve (46) and static mixing element (47), the hydrogen supply of the methanization reactor (33) is ensured through a buffer tank (36) and a hydrogen supply valve (35), the buffer tank (36) is fed by operating the water electrolyzer (40), through a compressor (37), the condensed water produced in the methanization reactor (33) is cleaned in a second water purifier (58) and led to the water electrolyzer (40), in the water electrolyzer ( 40) separated oxygen is led through a compressor (42) into a buffer tank (43), from where it is delivered through an oxygen valve (44) into the mixing valve (45), the methane produced in the methanization reactor (33) through a valve (32) and a compressor (30) ) into the natural gas pipeline, if the methanization reactor (33) does not work due to lack of hydrogen and the buffer tank (25) storing carbon dioxide is full, the gas engine (1) is assisted by a control system (51) , the control system (51) closes the corresponding valves (24, 28, 29, 32, 35, 44, 46, 52) and the air supply to the gas engine (1) will be done by opening an air supply valve (5) and the discharge of the generated flue gases is made possible by opening a flue gas discharge valve (17), the operation of the water electrolyzer (40) is also controlled with the help of the control system (51).

6. The method according to claim 5, **characterized by** starting the system by filling the buffer tanks (25, 36, 43) and operating the methanization reactor (33) after the filling is completed.

7. The method according to claim 5 or 6, **characterized in that** an external heat energy source is connected via a heat exchanger (20) in the section before the carbon dioxide buffer tank (25), and this heat energy is led to at least one carbon dioxide turbine (21, 50) from the heat exchanger (20).

8. The method according to any one of claims 5-7, **characterized in that** the control system (51) is connected to the to the Transmission System Operator for the independent control of the water electrolyzer (40) and the gas engine (1) and for the operation of the electricity system according to the demand.

9. The method according to any one of claims 5-8, **characterized in that** the amount of oxygen required to burn the fuel in the gas engine (1) and the amount of carbon dioxide required to ensure the thermal stability of the gas engine (1) are provided by the automatic control of the carbon dioxide valve (28) and the oxygen valve (44) and/or the mixing valve (45), to which the composition and temperature of the flue gas are continuously checked.

10. The method according to any one of claims 5-9, **characterized in that** ensuring the hydrogen-carbon dioxide demand of the methanization reactor (33) is carried out by controlling the carbon dioxide supply valve (29) and the hydrogen supply valve (35) with the automatics of the methanization reactor (33)
